# EUROPEAN PATENT APPLICATION

(11) **EP 4 790 933 A1**
(43) Date of publication of application: **12.08.2026**
(21) Application number: 26156543.6
(22) Date of filing: 05.02.2026
(51) Int. Cl.: H04L 1/1829

(54) **METHOD AND APPARATUS FOR PROCESSING TERMINAL-INITIATED BEAM REPORTING AND HARQ FEEDBACK USING PUCCH**

(30) Priority: 06.02.2025 KR 20250015498; 28.01.2026 KR 20260016624
(71) Applicant: KT Corporation, Seongnam-si, Gyeonggi-do 13606 (KR)
(72) Inventor: KWON, Doil, 13606 Seongnam-si, Gyeonggi-do (KR); PARK, Kyujin, 13606 Seongnam-si, Gyeonggi-do (KR)
(74) Representative: BCKIP Part mbB

(57) **Abstract**

Provided are a method and apparatus for processing UE-initiated beam reporting (UEIBR) and hybrid automatic repeat request (HARQ) feedback using a physical uplink control channel (PUCCH) in a wireless communication system. A terminal identifies whether transmission of first uplink control information related to UEIBR is required on a first PUCCH resource and identifies whether transmission of second uplink control information including HARQ feedback is required on a second PUCCH resource. Furthermore, when the first PUCCH resource and the second PUCCH resource are respectively configured according to different PUCCH formats, the terminal transmits only the second uplink control information.

## Description

### CROSS-REFERENCE TO RELATED THE APPLICATION

This application is based on and claims priority on Patent Application No. 10-2025-0015498 filed on Feb. 6, 2025, and No. 10-2026-0016624 filed on Jan. 28, 2026 in the Korean Intellectual Property Office.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios classified as Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, and high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

### SUMMARY

The disclosure provides a method and apparatus for efficiently processing UE-initiated beam reporting and HARQ feedback in a wireless communication system.

According to an embodiment, a method of operating a terminal in a wireless communication system may be provided. The method may include identifying whether transmission of first uplink control information related to UE-initiated beam reporting (UEIBR) is required on a first physical uplink control channel (PUCCH) resource, identifying whether transmission of second uplink control information including hybrid automatic repeat request (HARQ) feedback is required on a second PUCCH resource, and transmitting only the second uplink control information when the first PUCCH resource and the second PUCCH resource are respectively configured according to different PUCCH formats.

According to another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: identifying whether transmission of first uplink control information related to UE-initiated beam reporting (UEIBR) is required on a first physical uplink control channel (PUCCH) resource, identifying whether transmission of second uplink control information including hybrid automatic repeat request (HARQ) feedback is required on a second PUCCH resource, and transmitting only the second uplink control information when the first PUCCH resource and the second PUCCH resource are respectively configured according to different PUCCH formats.

The transmission of only the second uplink control information may be performed on the second PUCCH resource.

The first PUCCH resource may be configured according to PUCCH format 0. Furthermore, the second PUCCH resource may be configured according to PUCCH format 1.

Meanwhile, the transmission of the first uplink control information on the first PUCCH resource may be dropped.

For example, the first PUCCH resource and the second PUCCH resource may at least partially overlap in a time domain.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architecture for a wireless communication service.
FIG. 4 illustrates a slot structure of an NR frame.
FIG. 5 shows an example of a subframe type in NR.
FIG. 6 illustrates a structure of a self-contained slot.
FIG. 7 is a diagram illustrating a comparison between a legacy scheme and a UE-initiated beam reporting scheme.
FIG. 8 is a diagram illustrating a case where a PUCCH resource for transmitting uplink control information related to UEIBR overlaps with a PUCCH resource for transmitting other uplink control information.
FIG. 9 is a diagram for describing a PUCCH sequence according to an embodiment of the disclosure.
FIG. 10 is a flowchart illustrating an operation method of a terminal according to an embodiment of the disclosure.
FIG. 11 is a block diagram showing apparatuses according to an embodiment of the disclosure.
FIG. 12 is a block diagram showing a terminal according to an embodiment of the disclosure.
FIG. 13 is a block diagram of a processor in accordance with an embodiment.
FIG. 14 is a detailed block diagram of a transceiver of a first apparatus shown in FIG. 11 or a transceiving unit of an apparatus shown in FIG. 12.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device. As used herein, the term "terminal" refers to a device capable of wireless communication, and a user equipment (UE) as defined in 3GPP standards may be an example of the terminal.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

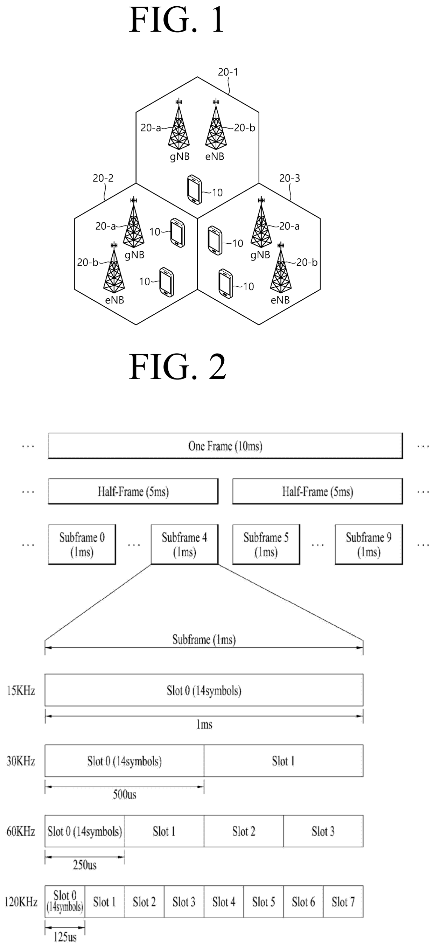

FIG. 1 **is a diagram illustrating a wireless communication** system.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

FIG. 2 is a diagram illustrating a structure of a radio frame used in new radio (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

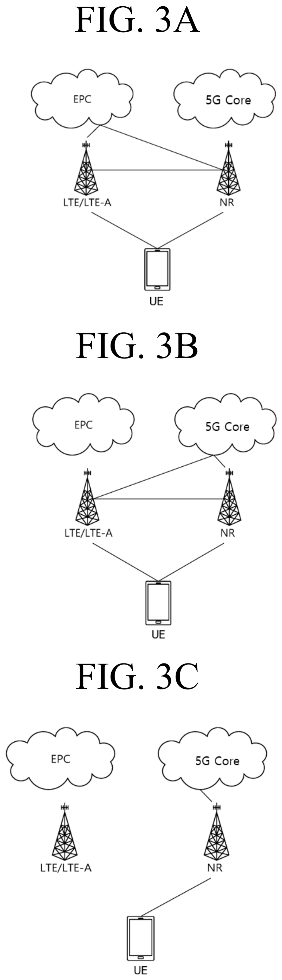

FIGS. 3A to 3C illustrate exemplary architectures for a wireless communication service.

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

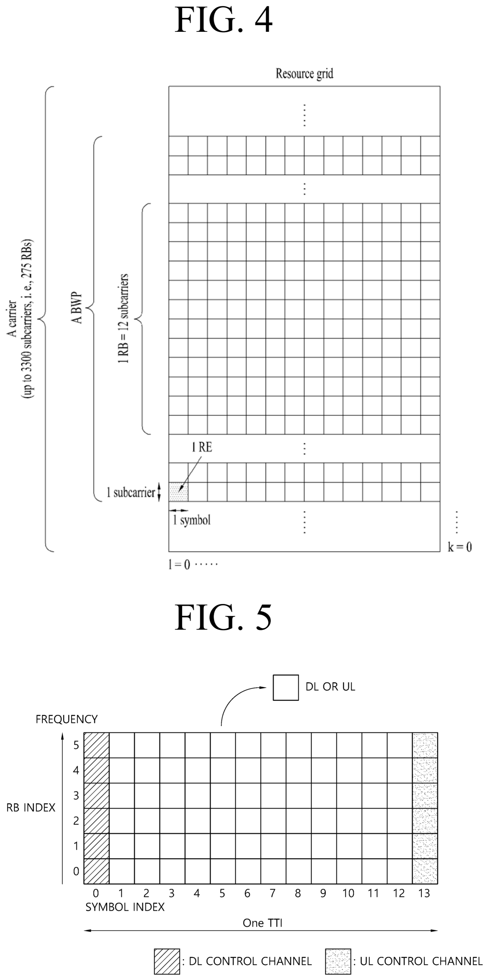

FIG. 4 illustrates a slot structure of an NR frame.

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

FIG. 5 shows an example of a subframe type in NR.

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

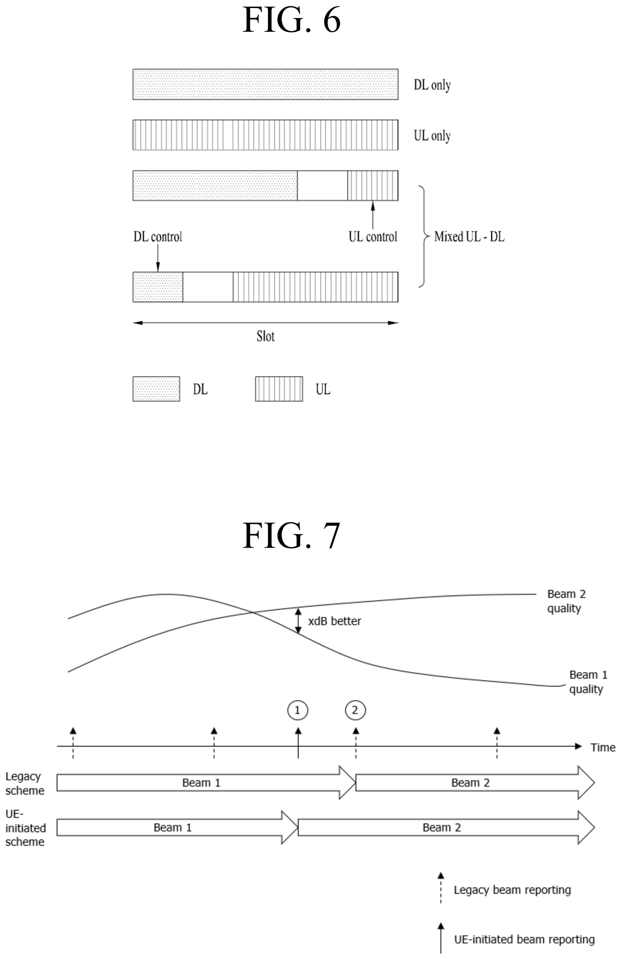

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - $DL region + Guard Period \left(GP\right) + UL control region$
   - $DL control region + GP + UL region$
      DL region: (i) DL data region, (ii) DL control region + DL data region
      UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

In 5G NR systems, as beam-based transmission is used, the beam management procedure to maintain an optimal beam between the terminal and the base station is important. In the typical beam management procedure, the network configures and activates periodic or semi-persistent beam reporting, or triggers aperiodic beam reporting relatively frequently, to secure an optimal or preferred beam for data and control information transmission in a timely manner. However, this method may cause a problem of increased uplink resource usage and control signaling overhead as the frequency of beam reporting and control signal transmission via the uplink increases. Conversely, if the beam reporting frequency is reduced, the beam information reported by the terminal may not reflect the latest state, and there is a possibility that the network may not always serve the terminal with the optimal beam, which may lead to a decrease in system performance.

Against this background, 3GPP is introducing the concept of UE-initiated beam reporting (UEIBR), in which the terminal itself detects changes in beam quality, determines the need for a beam report, and actively initiates the beam report. In general, since the terminal may recognize situations where beam quality changes due to increased mobility or changes in the channel environment more quickly and accurately than the network, application of UEIBR may enable reduction of unnecessary periodic or frequent network-triggered beam reporting while providing more timely beam-related information. In UEIBR, a procedure is being considered in which the terminal indicates the initiation of a beam report through uplink control information and subsequently transmits beam-related measurement information.

**FIG. 7** **is a diagram illustrating a comparison between a legacy scheme and a UE-initiated beam reporting scheme.**

Referring to FIG. 7, a terminal continuously measures the quality of a plurality of beams, for example, beam 1 and beam 2, over time. In FIG. 7, based on the beam quality measured by the terminal, the optimal beam appears to change from beam 1 to beam 2 around time ①. That is, after time ①, it becomes more appropriate to serve the terminal via beam 2. However, in the typical beam reporting scheme (legacy scheme), since the time at which the terminal may perform a beam report to the network is limited to periodic or pre-set times, the terminal may not perform a report requesting a beam change immediately at time ①. In this case, the terminal may request a beam change only at time ②, which is the fastest arriving beam reporting time after time ①. As a result, during the interval from time ① to time ②, the terminal is served through a beam no longer optimal, and there is a possibility that communication performance may be degraded.

On the other hand, when applying the UEIBR method (UE-Initiated Beam Reporting), the terminal may immediately initiate a beam report at time ①, which is the time when it recognizes that the optimal beam has changed to beam 2 based on the beam quality measurement result. Accordingly, the network may perform a beam change more quickly, and the performance degradation due to beam switching delay that may occur in the typical method may be reduced.

Hereinafter, the progress of 3GPP standardization and agreed-upon content related to UEIBR will be described.

In the NR MIMO Phase 5 item of 3GPP Release 19, the introduction of UE-initiated/event-driven beam management, i.e., UEIBR, is being targeted as a measure to reduce uplink control signal overhead and delay in a beam-based transmission environment. UEIBR assumes a unified Transmission Configuration Indicator (TCI) framework but is designed to reuse the existing CSI measurement and reporting configuration framework as much as possible, and primarily targets intra-cell and inter-cell beam management considering the FR2 environment and a single Transmission and Reception Point (sTRP).

To support UEIBR, in Rel-19, the definition of an uplink signaling procedure and transmission medium is being discussed to allow a terminal to initiate a beam report via an uplink signal without an explicit trigger from the network when it detects an event such as a change in beam quality.

In the Work Item Description (WID), the following enhancements in terms of uplink signaling are being considered to support UEIBR.
- Define the content of uplink signaling information and related procedures for the terminal to indicate the need for a beam report, thereby supporting fast beam switching.
- Define an uplink signaling medium/container considering the UE-initiated or event-driven characteristics, which is primarily designed for beam reporting purposes.

Such uplink signaling is being reviewed in a direction maintaining compatibility with the existing CSI reporting framework while supporting the low-latency and low-overhead characteristics of UEIBR.

The UEIBR transmission procedure is divided into Mode-A and Mode-B, and it has been agreed that the following is commonly supported in both modes.
- The terminal transmits 1-bit indication information via a first PUCCH channel to request or notify the use of a second uplink channel for subsequent delivery of a beam report. In this case, the first PUCCH channel is configured as a periodic PUCCH resource using PUCCH format 0 or format 1, and the corresponding resource is set up via dedicated RRC signaling.

In both Mode-A and Mode-B, whether to support multi-bit indication for multiple event occurrences and the related detailed procedures have been left as items for further study (FFS).

Furthermore, the first PUCCH channel for UEIBR is defined as a new Uplink Control Information (UCI) type. For this purpose, a dedicated RRC parameter such as "firstPUCCHResourceConfig-UEIBR" may be introduced to configure a periodic PUCCH resource. The corresponding RRC parameter may not be associated with a "SchedulingRequestId". The 1-bit indication information may be mapped to the PUCCH resource by reusing the existing positive/negative encoding mechanism of a Scheduling Request (SR). The dedicated RRC parameter may include periodicityAndOffset and/or a PUCCH-ResourceID.

An RRC parameter named "firstPUCCHResourceConfig-UEIBR" is defined to configure a PUCCH resource for transmitting uplink control information (i.e., UCI) for UEIBR. Furthermore, a PUCCH resource ID and periodicity may be configured for the PUCCH resource. Furthermore, the format of the PUCCH resource configured by "firstPUCCHResourceConfig-UEIBR" may be PUCCH format 0 or PUCCH format 1. In particular, PUCCH format 0 is a format for transmitting a few bits (e.g., 1 bit or 2 bits) of uplink control information with low latency and low overhead using a small number of OFDM symbols and is suitable for cases where a terminal needs to quickly initiate a report when an event occurs, such as UEIBR. Furthermore, PUCCH format 1 is a format for transmitting uplink control information using a relatively large number of OFDM symbols and may be flexibly applied even when a terminal multiplexes and transmits other uplink control information along with UEIBR UCI. Accordingly, the present disclosure will be described focusing on the case where a PUCCH resource for UEIBR transmission is set to PUCCH format 0 and a PUCCH resource for HARQ-ACK/NACK transmission is set to PUCCH format 1, and the case where a PUCCH resource for UEIBR transmission is set to PUCCH format 1 and a PUCCH resource for HARQ-ACK/NACK transmission is set to PUCCH format 0.

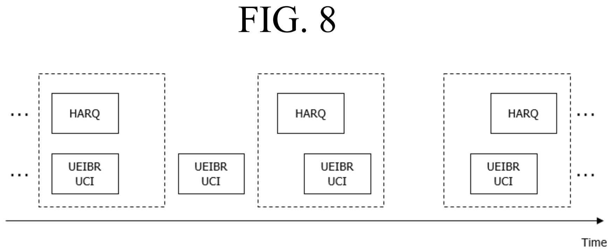

FIG. 8 is a diagram illustrating a case where a PUCCH resource for transmitting uplink control information related to UEIBR overlaps with a PUCCH resource for transmitting other uplink control information.

When a PUCCH resource for transmitting uplink control information (UCI) for UEIBR is periodically allocated, that PUCCH resource may overlap in the time domain with a PUCCH resource allocated for transmitting existing uplink control information, such as HARQ-ACK/NACK. For example, a PUCCH resource for UEIBR UCI transmission and a PUCCH resource for HARQ feedback transmission may be allocated within the same slot, or they may overlap with each other in some OFDM symbol intervals or the entire symbol interval.

Referring to FIG. 8, a PUCCH resource for UEIBR UCI transmission and a PUCCH resource for other UCI transmission may partially or fully overlap in the time domain. Here, partial overlap includes cases where the two PUCCH resources are allocated within the same slot, even if they do not overlap at the symbol level. In such a resource overlap situation, a resource processing method for efficiently transmitting a plurality of uplink control information is required.

Accordingly, the present disclosure proposes a method for, when a PUCCH resource for transmitting UEIBR UCI and a PUCCH resource for transmitting other uplink control information including HARQ feedback overlap in the time domain, multiplexing and transmitting the UEIBR UCI together with the existing uplink control information on a single PUCCH resource. Furthermore, transmission of at least one of UEIBR UCI or the other uplink control information may be dropped according to the overlap situation and/or transmission priority, and the non-dropped uplink control information may be transmitted through the single PUCCH resource. Through the proposed method, it may be possible to ensure UEIBR UCI transmission as much as possible, reduce additional uplink resource consumption, and enable efficient utilization of periodically allocated PUCCH resources.

### Multiplexing Method

When a PUCCH resource for transmitting uplink control information (UCI) related to UEIBR and a PUCCH resource for HARQ-ACK/NACK transmission partially or fully overlap in the time domain, the terminal may multiplex and transmit a plurality of uplink control information using a single PUCCH resource.

The proposed multiplexing method is characterized in that the terminal maps information indicating multiplexing of UEIBR UCI with HARQ-ACK/NACK to a sequence transmitted through PUCCH format 0 or PUCCH format 1. In one embodiment, when multiplexing via PUCCH format 0, the terminal may newly define a cyclic shift (CS) parameter m_CS for the base sequence used in PUCCH format 0, which is distinct from the existing HARQ-ACK/NACK transmission, and map the CS parameter m_CS to correspond to the UEIBR UCI transmission. Furthermore, when multiplexing via PUCCH format 1, the terminal may define a new sequence distinguishable from the sequence used in the existing HARQ-ACK/NACK transmission, and set the new sequence to correspond to the UEIBR UCI transmission.

Hereinafter, a HARQ-ACK/NACK and UEIBR UCI transmission/multiplexing rule will be described.

When HARQ-ACK/NACK and UEIBR UCI are required to be transmitted in the same slot, a terminal may determine whether to transmit UEIBR UCI or perform multiplexing according to a PUCCH format configured for HARQ-ACK/NACK transmission. In one embodiment, when the PUCCH format for HARQ-ACK/NACK transmission is PUCCH format 1, the terminal may transmit only HARQ-ACK/NACK and drop the transmission of UEIBR UCI. This is because when a resource according to PUCCH format 0 for UEIBR UCI transmission and a resource according to PUCCH format 1 for HARQ-ACK/NACK transmission are simultaneously required in the same slot, the terminal may prioritize and ensure the transmission of HARQ-ACK/NACK and drop the transmission of UEIBR UCI according to a priority rule in a situation where a plurality of PUCCH transmissions are simultaneously required.

When the PUCCH format for HARQ-ACK/NACK transmission is PUCCH format 0, the terminal may multiplex and transmit UEIBR UCI together with HARQ-ACK/NACK. In such a configuration, considering that a procedure for multiplexing HARQ-ACK/NACK and a Scheduling Request (SR) is defined in the 3GPP standard for multiplexing via PUCCH format 0, the present disclosure may also include the case of multiplexing to include not only HARQ-ACK/NACK and SR but also UEIBR UCI.

In one embodiment, the number of possible transmission cases may increase according to the combination of HARQ-ACK/NACK and UEIBR UCI (and SR), and as illustrated in Table 5, all possible cases may be defined as a total of 24 cases. That is, in addition to the cases for when UEIBR UCI is not included, to support 12 additional cases for UEIBR UCI transmission, distinguishing using only existing defined sequences is difficult, so a new sequence needs to be defined. Accordingly, the present disclosure proposes a method for securing additional orthogonal sequences by applying an Orthogonal Cover Code (OCC).

Specifically, a terminal may perform multiplexed transmission of HARQ-ACK/NACK and UEIBR UCI (and SR) according to the procedure described below. The terminal may determine a sequence cyclic shift (CS) parameter m_CS and an OCC configuration to be used for each case and may select a PUCCH resource allocated for HARQ-ACK/NACK transmission as a PUCCH resource for multiplexed transmission. Thereafter, the terminal may generate a transmission sequence by using the configured m_CS according to the case and transmit the PUCCH by applying an OCC to the generated sequence.

Furthermore, when the OFDM symbol length of the selected PUCCH resource is 1, the symbol length may be extended to 2 to secure transmission reliability, and accordingly, the sequence length may be increased to 24. casein such a configuration, from the 13th value to the 24th value of the generated sequence may be configured by repeating the sequence from the 1st value to the 12th value, and thereafter, an OCC may be applied to the entire sequence.

Accordingly, a receiving side may determine to which of the 24 cases it corresponds by analyzing the applied CS parameter and whether an OCC is applied or the application characteristics of the received PUCCH signal, and through the proposed multiplexing method, may stably recover the HARQ-ACK/NACK, SR, and UEIBR UCI.

**[Table 5]**

| Case | HARQ | SR | UEIBR | m_CS |
|---|---|---|---|---|
| 1 | NACK | - | - | 0 |
| 2 | NACK | + | - | 3 |
| 3 | NACK | - | + | Needs definition |
| 4 | NACK | + | + | Needs definition |
| 5 | ACK | - | - | 6 |
| 6 | ACK | + | - | 9 |
| 7 | ACK | - | + | Needs definition |
| 8 | ACK | + | + | Needs definition |
| 9 | NACK; NACK | - | - | 0 |
| 10 | NACK; NACK | + | - | 1 |
| 11 | NACK; NACK | - | + | Needs definition |
| 12 | NACK; NACK | + | + | Needs definition |
| 13 | NACK; ACK | - | - | 3 |
| 14 | NACK; ACK | + | - | 4 |
| 15 | NACK; ACK | - | + | Needs definition |
| 16 | NACK; ACK | + | + | Needs definition |
| 17 | ACK; NACK | - | - | 9 |
| 18 | ACK; NACK | + | - | 10 |
| 19 | ACK; NACK | - | + | Needs definition |
| 20 | ACK; NACK | + | + | Needs definition |
| 21 | ACK; ACK | - | - | 6 |
| 22 | ACK; ACK | + | - | 7 |
| 23 | ACK; ACK | - | + | Needs definition |
| 24 | ACK; ACK | + | + | Needs definition |

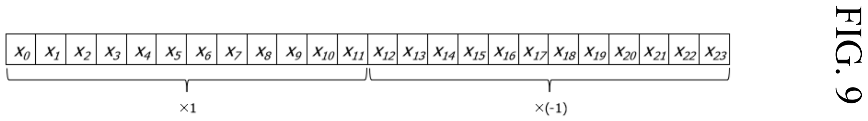

FIG. 9 is a diagram for describing a PUCCH sequence according to an **embodiment of the disclosure.**

Hereinafter, a multiplexing method upon overlap of HARQ-ACK/NACK, SR, and UEIBR UCI according to an embodiment of the present disclosure is described.

Referring to FIG. 9 and Table 6 below, a specific embodiment is shown for a case where a PUCCH resource for HARQ-ACK/NACK transmission and a PUCCH resource for UEIBR UCI transmission overlap in the time domain. In this embodiment, a total of 24 transmission cases are defined according to the combination of HARQ-ACK/NACK, SR, and UEIBR UCI, and the sequence cyclic shift (CS) parameter m_CS and whether an Orthogonal Cover Code (OCC) is applied corresponding to each case are shown in Table 6.

Specifically, for the case where HARQ-ACK/NACK and UEIBR UCI are transmitted together (HARQ+UEIBR), a terminal may assign the same m_CS as in a HARQ-only case. Furthermore, for the case where HARQ-ACK/NACK, SR, and UEIBR UCI are transmitted together (HARQ+SR+UEIBR), the same m_CS as in the case where HARQ-ACK/NACK and SR are transmitted together (HARQ+SR) may be assigned.

In such a configuration, when using the same m_CS, an OCC may be additionally applied in this embodiment to distinguish between generated sequences. In one embodiment, by applying a length-2 OCC [1, -1], it is possible to generate a plurality of sequences maintaining orthogonality with each other even when using the same CS parameter m_CS. Accordingly, a receiving side may determine whether the corresponding PUCCH transmission corresponds to a HARQ-only, HARQ+UEIBR, or HARQ+SR+UEIBR case, based on the combination of the CS parameter and the OCC.

Furthermore, as illustrated in FIG. 9, when the OFDM symbol length of PUCCH format 0 is 1, the symbol length may be extended to 2 to secure sequence transmission stability, and accordingly, the sequence length may be increased to 24. In such a configuration, from the 13th element to the 24th element of the sequence are configured by repeating the sequence from the 1st element to the 12th element, and then an OCC is applied to the entire sequence. Through application of the OCC to the entire sequence, multiplexed transmission of HARQ-ACK/NACK, SR, and UEIBR UCI may be performed even in a fully overlapped resource environment.

**[Table 6]**

| Case | HARQ | SR | UEIBR | m_CS |
|---|---|---|---|---|
| 1 | NACK | - | - | 0 |
| 2 | NACK | + | - | 3 |
| 3 | NACK | - | + | 0+OCC |
| 4 | NACK | + | + | 3+OCC |
| 5 | ACK | - | - | 6 |
| 6 | ACK | + | - | 9 |
| 7 | ACK | - | + | 6+OCC |
| 8 | ACK | + | + | 9+OCC |
| 9 | NACK; NACK | - | - | 0 |
| 10 | NACK; NACK | + | - | 1 |
| 11 | NACK; NACK | - | + | 0+OCC |
| 12 | NACK; NACK | + | + | 1+OCC |
| 13 | NACK; ACK | - | - | 3 |
| 14 | NACK; ACK | + | - | 4 |
| 15 | NACK; ACK | - | + | 3+OCC |
| 16 | NACK; ACK | + | + | 4+OCC |
| 17 | ACK; NACK | - | - | 9 |
| 18 | ACK; NACK | + | - | 10 |
| 19 | ACK; NACK | - | + | 9+OCC |
| 20 | ACK; NACK | + | + | 10+OCC |
| 21 | ACK; ACK | - | - | 6 |
| 22 | ACK; ACK | + | - | 7 |
| 23 | ACK; ACK | - | + | 6+OCC |
| 24 | ACK; ACK | + | + | 7+OCC |

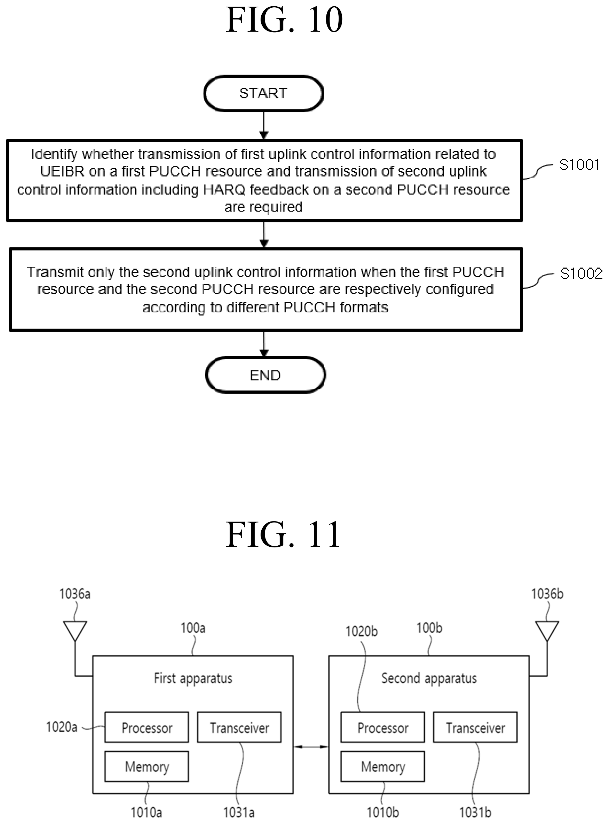

**FIG. 10** **is a flowchart illustrating an operation method of a terminal according to an embodiment of the disclosure.**

Referring to FIG. 10, a terminal identifies whether transmission of first uplink control information related to UE-Initiated Beam Reporting (UEIBR) is required on a first Physical Uplink Control Channel (PUCCH) resource, and identifies whether transmission of second uplink control information including Hybrid Automatic Repeat and reQuest (HARQ) feedback is required on a second PUCCH resource (S1001). Furthermore, the terminal transmits only the second uplink control information when the first PUCCH resource and the second PUCCH resource are respectively configured according to different PUCCH formats (S1002).

The transmission of only the second uplink control information may be performed on the second PUCCH resource.

The first PUCCH resource may be configured according to PUCCH format 0, and the second PUCCH resource may be configured according to PUCCH format 1.

The transmission of the first uplink control information on the first PUCCH resource may be dropped.

For example, the first PUCCH resource and the second PUCCH resource may at least partially overlap in the time domain.

The embodiments described up to now may be implemented through various means. For example, the embodiments may be implemented by hardware, firmware, software, or a combination thereof. Details will be described with reference to the accompanying drawings.

**FIG. 11** **is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031 a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

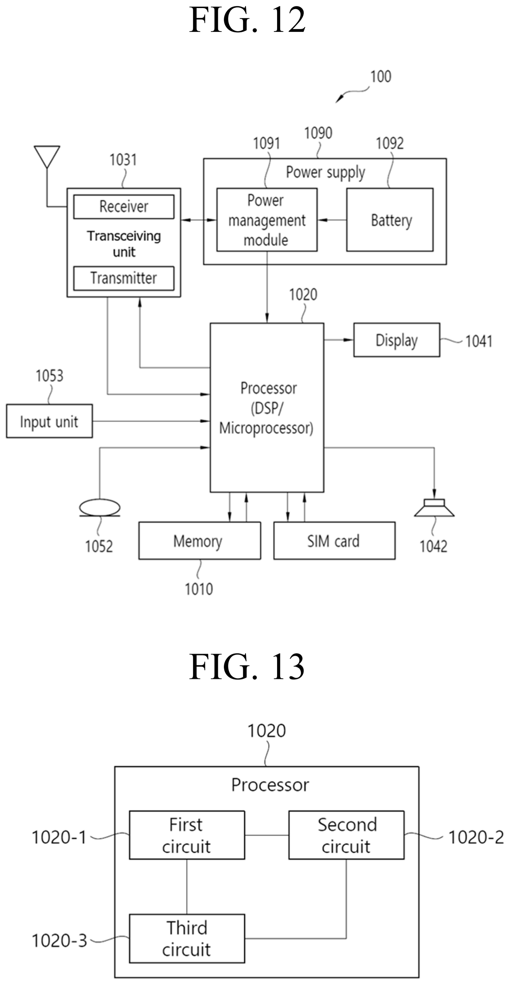

**FIG. 12** **is a block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some constituent elements are referred to as a unit in the disclosure. However, the embodiments are not limited thereto. For example, such term "unit" may also refer to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 13** **is a block diagram of a processor in accordance with an embodiment.**

Referring to FIG. 13, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

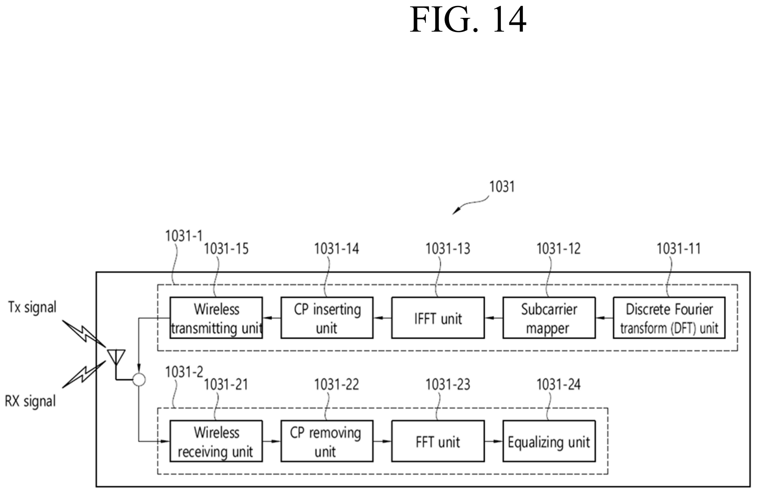

**FIG. 14** **is a detailed block diagram of a transceiver of a first apparatus shown in** **FIG. 11** **or a transceiving unit of an apparatus shown in** **FIG. 12****.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some constituent elements are referred to as a unit in the disclosure. However, the embodiments are not limited thereto. For example, such term "unit" may also refer to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, processing of PUCCH format-based HARQ feedback and UEIBR control information may be efficiently performed in a wireless communication system.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:
identifying whether transmission of first uplink control information related to user equipment -initiated beam reporting (UEIBR) is required on a first physical uplink control channel (PUCCH) resource;
identifying whether transmission of second uplink control information including hybrid automatic repeat request (HARQ) feedback is required on a second PUCCH resource; and
transmitting only the second uplink control information when the first PUCCH resource and the second PUCCH resource are respectively configured according to different PUCCH formats.

2. The method of claim 1, wherein the transmission of only the second uplink control information is performed on the second PUCCH resource.

3. The method of claim 2, wherein the first PUCCH resource is configured according to PUCCH format 0.

4. The method of claim 3, wherein the second PUCCH resource is configured according to PUCCH format 1.

5. The method of claim 1, wherein the transmission of the first uplink control information on the first PUCCH resource is dropped.

6. The method of claim 1, wherein the first PUCCH resource and the second PUCCH resource at least partially overlap in a time domain.

7. A terminal in a wireless communication system, comprising:
at least one processor; and
at least one memory configured to store instructions and operably electrically connectable to the at least one processor,
wherein operations performed based on the instructions executed by the at least one processor comprise:
identifying whether transmission of first uplink control information related to user equipment-initiated beam reporting (UEIBR) is required on a first physical uplink control channel (PUCCH) resource;
identifying whether transmission of second uplink control information including hybrid automatic repeat request (HARQ) feedback is required on a second PUCCH resource; and
transmitting only the second uplink control information when the first PUCCH resource and the second PUCCH resource are respectively configured according to different PUCCH formats.

8. The terminal of claim 7, wherein the transmission of only the second uplink control information is performed on the second PUCCH resource.

9. The terminal of claim 8, wherein the first PUCCH resource is configured according to PUCCH format 0.

10. The terminal of claim 9, wherein the second PUCCH resource is configured according to PUCCH format 1.

11. The terminal of claim 7, wherein the transmission of the first uplink control information on the first PUCCH resource is dropped.

12. The terminal of claim 7, wherein the first PUCCH resource and the second PUCCH resource at least partially overlap in a time domain.
